# EUROPEAN PATENT APPLICATION

(11) **EP 2 816 846 A1**
(43) Date of publication of application: **24.12.2014**
(21) Application number: 13172331.4
(22) Date of filing: 17.06.2013
(51) Int. Cl.: H04W 48/16, H04W 48/18, H04W 84/12, H04W 92/20

(54) **3GPP base station, in particular eNodeB, enabling discovery of non-3GPP access networks, in particular Wi-Fi access points**

(71) Applicant: ALCATEL LUCENT, 92100 Boulogne-Billancourt (FR)
(72) Inventor: Orlandi, Barbara, 91620 Nozay (FR)
(74) Representative: Camus, Olivier Jean-Claude

(57) **Abstract**

The present invention relates to a base station of a 3GPP network, such as an eNodeB, which builds its own Wi-Fi map, i.e. information about the Wi-Fi environment in the vicinity of the base station. It is known that a user equipment can query a so-called Access Network Discovery and Selection Function within the evolved packet core for information about non-3GPP accesses. However, information as specified by IEEE 802.1-2011 (Wi-Fi Alliance Hotspot 2.0) is currently not included in this ANDSF information. Another solution being discussed at 3GPP is that the user equipment needs to scan, retrieve in the beacon and/or send Access Network Query Protocol queries, also known under the acronym ANQP, to obtain a list of networks that may be available in the vicinity of the user equipment and information assisting the user equipment to expedite the connection to these networks. However, a equipment-based solution has several drawbacks such as battery consumption, and that the information can not be generated ahead of time, i.e. the equipment must be under Wi-Fi network coverage. This problem is solved by the application in that 3GPP base station BS (BS1) comprises a Wi-Fi interface (WI) which obtains the above mentioned information by a) sending Access Network Query Protocol Queries (ANQP_q) and receiving respective responses (ANQP_r) from the wireless hotspots (WH); b) reading beacon information from the wireless hotspots; or c) sending Probe requests and receiving corresponding responses. In a further alternative, the information may also be obtained from a neighbour base station over an X2 interface.

## Description

### FIELD OF THE INVENTION

The present invention relates to a base station for enabling non-3GPP access network discovery and/or selection. The invention concerns also a method for enabling non-3GPP access network discovery and/or selection.

### BACKGROUND

It is known the Access Network Discovery and Selection Function, also known under the acronym ANDSF. The ANDSF is an entity within an evolved packet core (EPC) of the core network architecture defined by the 3GPP standard compliant mobile networks.

The purpose of the ANDSF is to assist user equipment to discover non-3GPP access wireless networks that can be used for data communications in addition to 3GPP access cellular networks and to provide the user equipment with rules policing the connection to these networks. User equipment can query the ANDSF for information about non-3GPP accesses. In response, ANDSF provides the access information which indicates when and where non-3GPP access may be available.

One solution being discussed at 3GPP is that the user equipment needs to scan, retrieve in the beacon and/or send Access Network Query Protocol queries, also known under the acronym ANQP, to obtain a list of networks that may be available in the vicinity of the user equipment and information assisting the user equipment to expedite the connection to these networks. Such information can include dynamic load information, Venue information, service and capabilities advertisements. Such information is defined in standard specifications IEEE 802.11-2011, Wi-Fi Alliance Hotspot 2.0 for example and is not included today in ANDSF Discovery information.

Some drawbacks of such solution are the consumption of battery of the user equipment and when several user equipment send ANQP queries they generate an unnecessary amount of load on the Wi-Fi network to retrieve the same information. Another drawback is that such information cannot be received ahead of time (before being under the Wi-Fi network coverage) or while the user equipment Wi-Fi interface is turned off for battery savings.

### SUMMARY OF THE INVENTION

The object of embodiments of the invention is therefore to overcome the drawback aforementioned. Accordingly, the present invention is directed to a base station and a method for enabling non-3GPP access network discovery and/or selection enhanced with load indication without unnecessary Wi-Fi signalling and without need of important consumption of battery for user equipment.

To achieve these advantages, and in accordance with the purpose of the invention as embodied, the present invention relates to a 3GPP base station for enabling non-3GPP access network discovery and/or selection, said non-3GPP access network referred to as wireless hotspot, said base station comprising:
- an interface to at least one wireless hotspot, referred to as wireless interface, constructed and arranged to obtain information about said at least one wireless hotspots, and/or
- an X2 interface to at least one neighbor base station, constructed and arranged to exchange information for said discovery and/or selection with said at least one neighbor base station.

It could be noted that the X2 is a logical interface defined by the 3GPP to connect eNBs. It is defined in TS 36.401.

The wireless interface is constructed and arranged to obtain information about the wireless hotspots by:
- reading beacon frames,
- send Probe Requests to wireless hotspots and receiving Probe Responses from the wireless hotspots, or
- sending Access Network Query Protocol queries to wireless hotspots and receiving Access Network Query Protocol responses from the wireless hotspots, or any combination thereof.

Thanks to the wireless interface constructed and arranged to read beacon frames or send Probe requests and/or Access Network Query Protocol (ANQP) queries to wireless hotspots and receive Probe responses and/or Access Network Query Protocol (ANQP) responses from the wireless hotspots, the base station can build its own Wi-Fi map. Therefore, the base station can builds its own local ANDSF or L-ANDSF discovery map. That discovery map may be richer than currently defined in C-ANDSF discovery and can include services and capabilities advertised via Hotspot 2.0 which allow base station to more easily discover Wi-Fi roaming relationships, determine access point capabilities and loading conditions.

It could be noted that the 3GPP standard has defined the ANDSF as a server in the packet core EPC. In the remainder of this document the current 3GPP ANDSF server in the packet core will be named C-ANDSF (Central-ANDSF) for easier distinction with the local instance L-ANDSF which is not defined in 3GPP but is located according to an embodiment of the invention in the base station.

Furthermore another advantage is that if such information is made available at base station level and provided by the base station to the user equipment, it removes the need for user equipment to scan and perform probe requests or ANQP queries to get detailed load and capability information from the neighboring Wi-Fi environment. This particularity permits to avoid overloading the network and battery consumption of user terminals.

Besides, user equipment can benefit from policies that already include in that information and from discovery information that can relay what they would have had to search via multiple ANQP queries to different Wi-Fi networks.

In a not limited embodiment, the information exchanged with said at least one neighbor base station includes information about at least one wireless hotspot known by said at least one neighbor base station.

In a not limited embodiment, the 3GPP base station comprises a local Access Network Discovery and Selection Function entity constructed and arranged to establish, from said information about wireless hotspots obtained, discovery information, referred to as accurate networks access map.

In a not limited embodiment, the 3GPP base station comprises a local Access Network Discovery and Selection Function entity constructed and arranged to establish, using wireless hotspot load retrieved from a neighbor base station, non-3GPP access network selection information referred to as policies.

In a not limited embodiment, the 3GPP base station comprises a local Access Network Discovery and Selection Function entity constructed and arranged to establish, using user equipment history retrived from a neighbor base station, non-3GPP access network selection information referred to as policies.

In a not limited embodiment, the 3GPP base station is constructed and arranged to transmit non-3GPP access network discovery and/or selection information to user equipment.

An embodiment of the invention relates also to a method for enabling non-3GPP access network discovery and/or selection, said non-3GPP access network referred to as wireless hotspot, said method comprising the step of obtaining, via an interface, referred to as wireless interface, of a 3GPP base station to at least one wireless hotspot, information about said at least one wireless hotspot, and/or via an X2 interface of said base station to at least one neighbor base station, information for said discovery and/or selection from said at least one neighbor base station.

In a not limited embodiment, the information obtained from said at least one neighbor base station includes information about at least one wireless hotspot known by said at least one neighbor base station.

In a not limited embodiment, the method comprises a step of establishing discovery information, referred to as accurate networks access map, from said information about wireless hotspots obtained, via a local Access Network Discovery and Selection Function entity of said base station.

In a not limited embodiment, the step of obtaining information about wireless hotspots is realized by:
- Reading, via the wireless interface, beacon information from wireless hotspots, or
- Send, via the wireless interface, Probe requests to wireless hotspots, and receive, via said wireless interface, Probe response from the wireless hotspots, or
- Send, via the wireless interface, Access Network Query Protocol queries to wireless hotspots and receive, via said wireless interface, Access Network Query Protocol response from the wireless hotspots, or any combination thereof.

In a not limited embodiment, the method comprises a step of establishing from the information obtained, via the local Access Network Discovery and Selection Function entity, non-3GPP access network selection information, referred to as policies, based on retrieved neighbor wireless hotspot load.

In a not limited embodiment, the method comprises a step of establishing from the information obtained, via the local Access Network Discovery and Selection Function entity, non-3GPP access network selection information, referred to as policies, based on retrieved user equipment history from a neighbor base station.

In a not limited embodiment, the method comprises a step of transmitting the information obtained about the wireless hotspots to at least a neighbor base station over an X2 interface.

In a not limited embodiment, the method comprises a step of transmitting the discovery and/or selection information to user equipment.

### BRIEF DESCRIPTION OF THE DRAWINGS

The accompanying drawings are included to provide a further understanding of the embodiments of the invention and are incorporated in and constitute a part of this specification, to illustrate embodiments of the invention and, together with the description, to explain the principles of the embodied invention:
- Figure 1 represents, in a not limited embodiment, a method for build an accurate networks access map according to an embodiment of the invention,
- Figure 2 depicts, in a not limited embodiment, three base stations constructed and arranged for enabling non-3GPP access network discovery and/or selection according to an embodiment of the invention,
- Figure 3 represents, in a not limited embodiment, a WI-FI map built by a base station and/or a method for enabling non-3GPP access network discovery and/or selection according to an embodiment of the invention.

### DESCRIPTION OF EMBODIMENTS

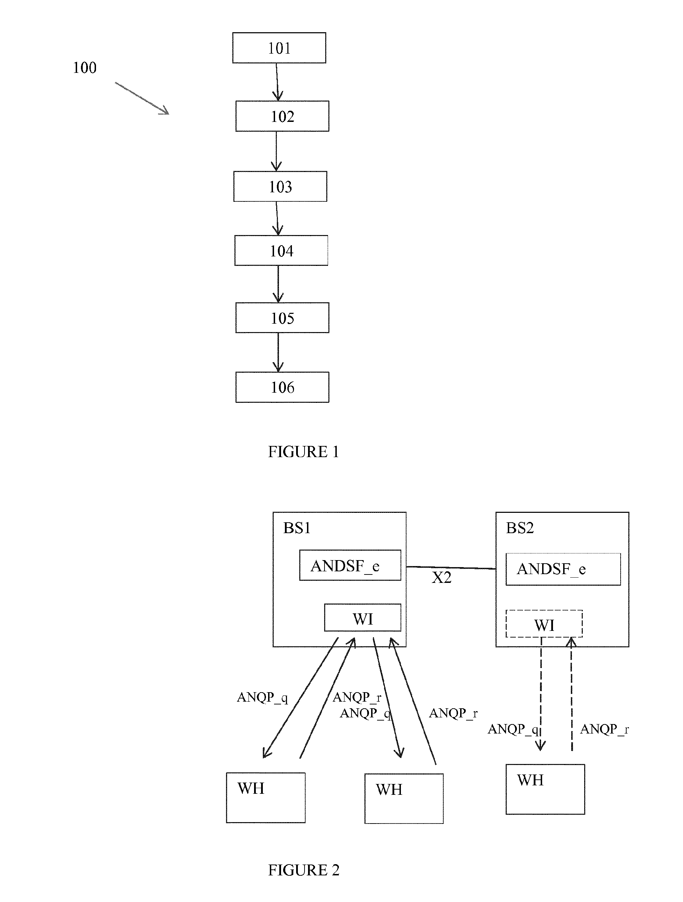

In reference to figure 1 steps of a method 100 for enabling non-3GPP access network discovery and/or selection according to an embodiment of the invention is represented.

It could be noted that the non-3GPP access network is referred to as wireless hotspot.

In a not limited embodiment, the method 100 comprises a step 101 of obtaining, via a wireless interface of a 3GPP base station to a wireless hotspot, information about the wireless hotspot (or access point "AP") and/or via an X2 interface of the 3GPP base station to at least one neighbor base station, information for the discovery and/or selection from the at least one neighbor base station.

In a not limited embodiment, obtaining of information 101 about wireless hotspots may be realized by sending, via an interface to at least one wireless hotspot, referred to as wireless interface, Access Network Query Protocol queries ANQP_q to wireless hotspots and receiving, via said wireless interface, Access Network Query Protocol response ANQP_r from the wireless hotspots.

In a not limited embodiment not illustrated, obtaining of information 101 about wireless hotspots may be realized by reading, via the wireless interface, beacon information from wireless hotspots.

In a not limited embodiment not illustrated, obtaining of information 101 about wireless hotspots may be realized by sending, via the wireless interface, Probe requests to wireless hotspots, and receiving, via said wireless interface, Probe response from the wireless hotspots.

In a not limited embodiment not illustrated, obtaining of information about wireless hotspots may be realized by provisioning.

In a not limited embodiment not illustrated, obtaining of information 101 about wireless hotspots may obtained from one neighbor base station knowing information about at least one wireless hotspot. In this case, the information are obtained via an X2 interface.

In the example illustrated, step 101 of obtaining information about wireless hotspots by sending and receiving ANQP queries ANQP_q and responses ANQP_r to and from wireless hotspots WH are embodied by a wireless interface WI of a 3GPP base station BS1 according to an embodiment of the invention constructed and arranged for enabling non-3GPP access network discovery and/or selection. In a not limited embodiment illustrated in figure 2 the 3GPP base station BS1 is an eNodeB.

It could be noted that the response received from the wireless hotpots WH comprises information about said wireless hotspots WH, for instance, information as suggested by the HOTSPOT 2.0 standard, for example information about the roaming partners available and hence the type of credentials which may be used with the access point or the Venue Information or Access Network Type as another example.

In a not limited embodiment, the method 100 further comprises a step 102 of establishing discovery information, referred to as accurate networks access map, from the information about wireless hotspots obtained. This establishment being realized by a local Access Network Discovery and Selection Function entity ANDSF_e of the 3GPP base station BS1 As such information is made available at base station level; it removes the need for user equipment to scan and perform ANQP queries ANQP_q, probe requests or beacon reading to get detailed load and capability information from the neighboring Wi-Fi environment.

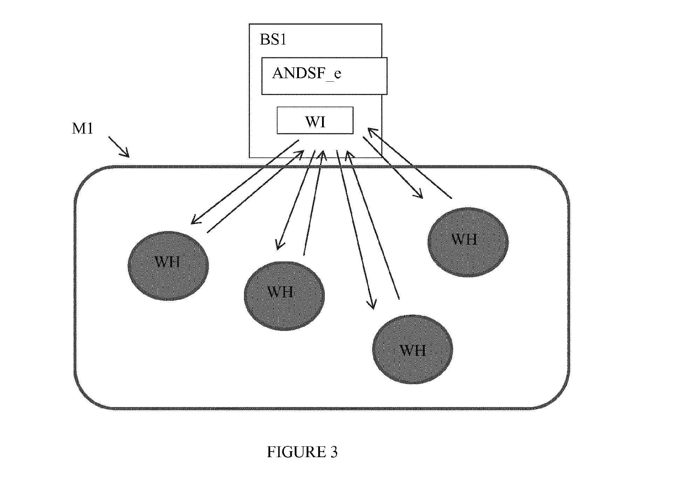

As shown in figure 3 one 3GPP base station BS1 with a Wi-Fi interface WI can build its own networks access map M1 using ANQP queries. This 3GPP base station BS1 may build its own ANDSF discovery map. This discovery map is richer than currently defined in C-ANDSF discovery and can include services and capabilities advertised via Hotspot 2.0. As this is based upon dynamic information, such building is a constant or periodic process thus ensuring that the map is always up-to-date.

In a not limited embodiment, the method 100 further comprises a step 102 of establishing 103 from the information obtained, via the local Access Network Discovery and Selection Function entity ANDSF_e, non-3GPP access network selection information, referred to as policies, based on retrieved neighbor wireless hotspot load.

In a not limited embodiment, the method 100 further comprises a step 102 of establishing 104 from the information obtained, via the local Access Network Discovery and Selection Function entity ANDSF_e, non-3GPP access network selection information, referred to as policies, based on retrieved user equipment history from a neighbor base station BS2.

In a not limited embodiment, the method 100 further comprises a step 105 of transmitting the information about the wireless hotspots WH to a neighbor base station BS2 over an X2 interface. This transmission may be sent to a base station BS2 comprising or not a wireless interface WI. Thanks to this step 105 the neighbor base station BS2 knows information known by the 3GPP base station BS1.

It could be noted that based on measurements from an indoor 3GPP base station according to an embodiment of invention, such a local ANDSF map could be shared by base stations (pico cells) neighboring on a same building floor. Therefore, user equipment under the coverage of such a small cell would get the map Wi-Fi map for the floor where it is currently on, if he moves to another floor, another 3GPP base station according to an embodiment of the invention can provide a new map. This solves Wi-Fi location issues in big buildings: the Wi-Fi map can be based on three dimensions (height) as opposed to only two dimensions when location is based only on GPS or geographical coordinates or a macro-cellular location.

It allows benefiting from overlapping of various cellular cells coverage to put in common and hence build a detailed map of Wi-Fi hotspots WH. Such a map can be constantly kept up-to-date as hotspots WH are switched on and off.

Today for SON features a user equipment history information element has been added in the S1AP and X2AP protocols. This information element includes the list of last visited cells by the user equipment. This information element does not take into account the fact that the user equipment may have moved not only between cellular cells (UTRAN, GERAN, E-UTRAN) but also Wi-Fi cells. Furthermore nowadays many devices have simultaneous multi-access capabilities meaning that they can camp at the same time on cellular and Wi-Fi (and potentially have established flows on both interfaces at the same time). In networks combining both cellular and Wi-Fi cells, such information is missing for optimizing multi-RAT handover/flow routing criteria.

Using X2 interface as embodied by the invention permits extending existing user equipment history information in S1AP and X2AP messages to add Wi-Fi cells to the last visited cell list and to mention for each Wi-Fi cell when simultaneous multi-access connectivity was applied and with which cellular cell.

In a not limited embodiment, the method 100 further comprises a step 106 of transmitting the discovery and/or selection information to user equipment.

Embodiments of the invention avoid that each user equipment needs to perform beacon readings, probe requests or ANQP queries for evaluating dynamic load of each hotspot or access point. That load is queried by the base station thanks to its wireless interface and:
- made available for all user equipment by including it in its policies, or
- sent to user equipment.

The information obtained by the method or 3GPP base station as embodied according to the invention allows user terminals to get the following information for Wi-Fi offload decisions:
- Load of the cellular cells (potentially including backhaul, processing resources etc.),
- Load of the WiFi APs (also including backhaul, processing resources etc.),
- Detailed and up-to-date coverage map,
- User equipment speed, user equipment history,
- Type of each Wi-Fi access network (PLMN, OUI, Venue Info, supported capabilities, potentially advertised services...).

In a not limited embodiment, the transmission and the reception information over the X2 interface is realized by:
- using an X2 private message, the X2-AP allows private messages to be defined between base stations. (TS 36.423 § 9.2.13/9.3.2).
- extending the X2 Resource Status Request/Update to include wireless network load and measurements, or
- extending the X2 setup request/response and base station Configuration Update message to include wireless served and/or neighboring cells information in addition to served and/or neighboring cellular cells
- extending the X2 UE History Information IE to add Wi-Fi cells to the last visited cell list and to mention for each Wi-Fi cell when simultaneous multi-access connectivity was applied and with which cellular cell.

Furthermore, at a certain point in time (either at start-up, activation, on trigger or periodically), the 3GPP base station as embodied according to the invention may share that configuration with its neighbor base stations. Thus the ANDSF entity of a neighbor base station may also be able to provide information to user equipment about the Wi-Fi environment even though that neighbor base station is not provisioned with that information and doesn't have a Wi-Fi interface to retrieve it itself. Thus the user equipment may have this information ahead of time without turning on its Wi-Fi interface.

To sum up, the method or the base station according to embodiments of the invention use the X2 interface between cellular cells to allow 3GPP base station to share all relevant information for Wi-Fi offload decisions including but not limited to load information, discovery information, user equipment history and new information relating to services/capabilities advertised by Wi-Fi access networks. This removes the need for user equipment to scan/perform multiple ANQP queries on Wi-Fi networks for getting information to evaluate policy criteria or perform detailed discovery of services.

It allows sharing fine-grain Local ANDSF information between neighbors 3GPP base station. This opens the door for ANDSF (and hence a Local-ANDSF on a small cells network) handling policies for load-balancing in a network that encompasses small cells from different technologies (cellular, Wi-Fi).

This also allows to benefit from small cellular cells coverage (indoor for instance) for building an accurate Wi-Fi map (for instance on a given floor of a building).

It could be noted that in not limited embodiments the method and the base station according to embodiments of the invention may be applied to the Wireless Local Area Network (WLAN) technology or to the Worldwide interoperabiliy for Microwave Access (WiMAX) technology.

## Claims

1. A 3GPP base station (BS1) for enabling non-3GPP access network discovery and/or selection, said non-3GPP access network referred to as wireless hotspot, said base station (BS1) comprising:
• an interface to at least one wireless hotspot, referred to as wireless interface (WI), constructed and arranged to obtain information about said at least one wireless hotspots (WH), and/or
• an X2 interface to at least one neighbor base station (BS2), constructed and arranged to exchange information for said discovery and/or selection with said at least one neighbor base station (BS2).

2. A 3GPP base station (BS1) according to claim 1, wherein said information exchanged with said at least one neighbor base station (BS2) includes information about at least one wireless hotspot (WH) known by said at least one neighbor base station (BS2).

3. A 3GPP base station (BS1) according to claim 1 or 2, comprising a local Access Network Discovery and Selection Function entity (ANDSF_e) constructed and arranged to establish, from said information about wireless hotspots obtained, discovery information, referred to as accurate networks access map (M1).

4. A 3GPP base station (BS1) according to any of claims 1 to 3, wherein the wireless interface (WI) is constructed and arranged to obtain information about the wireless hotspots (WH) by:
• reading beacon frames,
• send Probe Requests to wireless hotspots and receiving Probe Responses from the wireless hotspots, or
• sending Access Network Query Protocol queries (ANQP_q) to wireless hotspots (WH) and receiving Access Network Query Protocol responses (ANQP_r) from the wireless hotspots (WH), or any combination thereof.

5. A 3GPP base station (BS1) according to any of claims 1 to 4, comprising a local Access Network Discovery and Selection Function entity (ANDSF_e) constructed and arranged to establish, using wireless hotspot load retrieved from a neighbor base station (BS2), non-3GPP access network selection information referred to as policies.

6. A 3GPP base station (BS1) according to any of claims 1 to 5, comprising a local Access Network Discovery and Selection Function entity (ANDSF_e) constructed and arranged to establish, using user equipment history retrived from a neighbor base station (BS2), non-3GPP access network selection information referred to as policies.

7. A 3GPP base station (BS1) according to any of the preceding claims wherein said 3GPP base station (BS1) is constructed and arranged to transmit non-3GPP access network discovery and/or selection information to user equipment.

8. Method (100) for enabling non-3GPP access network discovery and/or selection, said non-3GPP access network referred to as wireless hotspot, said method (100) comprising the step of obtaining (101), via an interface, referred to as wireless interface (WI), of a 3GPP base station (BS1) to at least one wireless hotspot, information about said at least one wireless hotspot (WH), and/or via an X2 interface of said base station (BS1) to at least one neighbor base station (BS2), information for said discovery and/or selection from said at least one neighbor base station (BS2).

9. A method according to claim 8, wherein said information obtained from said at least one neighbor base station (BS2) includes information about at least one wireless hotspot (WH) known by said at least one neighbor base station (BS2).

10. Method according to claim 8 or 9, comprising the step of establishing (102) discovery information, referred to as accurate networks access map (M1), from said information about wireless hotspots obtained, via a local Access Network Discovery and Selection Function entity (ANDSF_e) of said base station (BS1).

11. Method (100) according to any of claims 8 to 10 wherein the step (101) of obtaining information about wireless hotspots (WH) is realized by:
• Reading, via the wireless interface (WI), beacon information from wireless hotspots (WH), or
• Send, via the wireless interface (WI), Probe requests to wireless hotspots (WH), and receive, via said wireless interface (WI), Probe response from the wireless hotspots (WH), or
• Send, via the wireless interface (WI), Access Network Query Protocol queries (ANQP_q) to wireless hotspots (WH) and receive, via said wireless interface (WI), Access Network Query Protocol response (ANQP_r) from the wireless hotspots (WH), or any combination thereof.

12. Method (100) according to one of claims 8 to 11 comprising a step (103) of establishing from the information obtained, via the local Access Network Discovery and Selection Function entity (ANDSF_e), non-3GPP access network selection information, referred to as policies, based on retrieved neighbor wireless hotspot load.

13. Method (100) according to one of claim 8 to 12 comprising a step (104) of establishing from the information obtained, via the local Access Network Discovery and Selection Function entity (ANDSF_e), non-3GPP access network selection information, referred to as policies, based on retrieved user equipment history from a neighbor base station (BS2).

14. Method (100) according to one of claims 8 to 13 comprising a step (105) of transmitting the information obtained about the wireless hotspots (WH) to at least a neighbor base station (BS2) over an X2 interface.

15. Method (100) according to one of the preceding claims 8 to 15 comprising a step (106) of transmitting the discovery and/or selection information to user equipment.
